## Europäisches Patentamt

## European Patent Office

## Office européen des brevets

(19)

(11) Veröffentlichungsnummer: **0 106 011 B1**

(12) **EUROPÄISCHE PATENTSCHRIFT**

(45) Veröffentlichungstag der Patentschrift:
**02.04.86**

(21) Anmeldenummer: **83104879.8**

(22) Anmeldetag: **18.05.83**

(51) Int. Cl.⁴: **B 60 K 31/02, B 60 K 28/10**

(54) **Einrichtung zum elektrischen Steuern der Fahrgeschwindigkeit.**

(30) Priorität: **15.10.82 DE 3238218**

(43) Veröffentlichungstag der Anmeldung:
**25.04.84 Patentblatt 84/17**

(45) Bekanntmachung des Hinweises auf die Patenterteilung:
**02.04.86 Patentblatt 86/14**

(84) Benannte Vertragsstaaten:
**DE FR GB IT SE**

(56) Entgegenhaltungen:
**DE - A - 2 540 182**
**FR - A - 2 435 369**
**US - A - 2 793 706**
**US - A - 2 863 962**

(73) Patentinhaber: **VDO Adolf Schindling AG,
Gräfstrasse 103, D-6000 Frankfurt/Main (DE)**

(72) Erfinder: **Pfalzgraf, Manfred, Luisenstrasse 24,
D-6000 Frankfurt/Main 1 (DE)**
Erfinder: **Graf, Kunibert, Therensenstrasse 26,
D-6233 Kelkheim/Ts. (DE)**

(74) Vertreter: **Könekamp, Herbert, Dipl.-Ing., Sodener
Strasse 9, D-6231 Schwalbach (DE)**

ACTORUM AG

## Beschreibung

Die Erfindung betrifft eine Einrichtung zum elektrischen Steuern der Fahrgeschwindigkeit eines Kraftfahrzeuges, mit einem von einem Gaspedal verstellbaren Sollwertgeber, von dessen Ausgangssignal ein Stellglied eines das Kraftstoff/ Luft-Gemisch eines Verbrennungsmotors beeinflussenden Elements beaufschlagbar ist, mit einem vom Gaspedal derart betätigbaren Pedalkontakt, dass bei aus der Leerlaufstellung herausbewegtem Gaspedal die Energieversorgung eines die Motordrehzahl beeinflussenden Aggregats herstellbar ist. Eine derartige Einrichtung ist in FR-A Nr. 2435369 beschrieben und dargestellt.

Bei derartigen bekannten Einrichtungen wird durch den Pedalkontakt sichergestellt, dass die Energieversorgung z.B. der Kraftstoffpumpe bei Leerlaufstellung des Gaspedals in einer die Motordrehzahl reduzierenden Weise beeinflusst wird. Dies dient dazu, bei einem Defekt der Einrichtung grundsätzlich ein Hochlaufen der Drehzahl und damit gefährliche Fahrsituationen zu vermeiden. Dazu ist es aber erforderlich, dass das Gaspedal in seiner Leerlaufstellung steht. Befindet sich das Gaspedal in einer aus der Leerlaufstellung herausbewegten Stellung, so ist eine solche Sicherung nicht gegeben. Dies kann z.B. der Fall sein, wenn die Feder, die das Gaspedal in seine Leerlaufstellung beaufschlagt, defekt ist. In einem solchen Fall kann, obwohl keine Betätigung des Gaspedals erfolgt, trotzdem ein Hochlaufen der Motordrehzahl erfolgen.

Es ist daher Aufgabe der Erfindung, eine Einrichtung nach dem Oberbegriff zu schaffen, deren Betriebssicherheit gegen unbeabsichtigtes Hochlaufen der Motordrehzahl wesentlich erhöht ist.

Diese Aufgabe wird erfindungsgemäss dadurch gelöst, dass in Reihe zum Pedalkontakt ein Sicherheitskontakt angeordnet ist, der durch mechanische Beaufschlagung des Gaspedals aus seiner Leerlaufstellung schliessbar ist. Eine solche mechanische Beaufschlagung des Gaspedals erfolgt durch das Niederdrücken des Gaspedals durch den Fahrer, so dass nur bei tatsächlicher Betätigung des Gaspedals durch den Fahrer das die Motordrehzahl beeinflussende Aggregat im Sinne einer Erhöhung der Motordrehzahl verstellt werden kann. Eine Verstellung des Gaspedals aus seiner Leerlaufstellung ohne ein derartiges Schliessen des Sicherheitskontakts bleibt ohne eine Reaktion der Motordrehzahl. Somit kann z.B. ein Bruch der Rückstellfeder des Gaspedals nicht zu einer kritischen Situation führen.

Um bei Nichtbetätigung des Gaspedals die Offenstellung des Sicherheitskontakts sicherzustellen, kann der Sicherheitskontakt entgegen einer bestimmten Federkraft schliessbar sein.

Der Pedalkontakt und der Sicherheitskontakt können z.B. in einer von einer Stromquelle zu einer Kraftstoffpumpe und/oder dem Zündstromkreis führenden Verbindungsleitung angeordnet sein, so dass ein geöffneter Pedalkontakt oder Sicherheitskontakt zu einem Abschalten der Benzinpumpe oder der Zündung und somit zu einer Reduzierung der Motordrehzahl führt.

Ist parallel zu Pedalkontakt und Sicherheitskontakt ein Stellgliedkontakt angeordnet, der in Leerlaufstellung des das Kraftstoff/Luft-Gemisch beeinflussenden Elements geschlossen und in Gasstellung des Elements geöffnet ist, so ist bei geöffnetem Pedalkontakt oder Sicherheitskontakt ein Leerlaufbetrieb des Motors möglich. Sollte sich aber bei diesem Betriebszustand das Stellglied durch einen Defekt aus seiner Leerlaufstellung herausbewegen, so wird durch das Öffnen des Stellgliedkontakts das die Motordrehzahl beeinflussende Aggregat im Sinne einer Reduzierung der Motordrehzahl beeinflusst.

In einer vorteilhaften bauraumsparenden Ausbildung kann der Sicherheitskontakt im Gaspedal angeordnet sein, wobei dies derart möglich ist, dass das Gaspedal aus zwei entgegen einer Federkraft relativ zueinander schwenkbaren Pedalteilen besteht, die einander zugewandt jeweils einen Kontakt des Sicherheitskontakts tragen, wobei die Kontakte bei relativer Zueinanderbewegung und Überwindung der Federkraft leitend miteinander verbindbar sind.

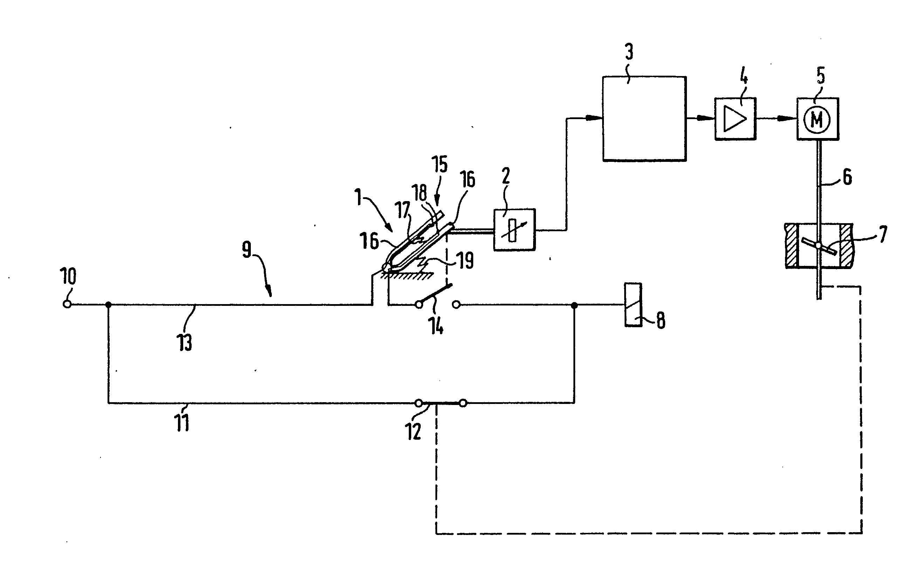

Ein Ausführungsbeispiel der Erfindung ist in der Zeichnung dargestellt und wird im folgenden näher beschrieben. Die einzige Figur der Zeichnung zeigt eine Einrichtung, die ein von einer Druckfeder 19 in seine Leerlaufstellung beaufschlagtes Gaspedal 1 aufweist, durch das ein als Potentiometer ausgebildeter Sollwertgeber 2 verstellbar ist. Das Ausgangssignal des Sollwertgebers 2 wird einer Regelelektronik 3 zugeleitet, die über einen Verstärker 4 entsprechend der Verstellung des Gaspedals 1 ein als Stellmotor ausgebildetes Stellglied 5 ansteuert. Durch eine Stellstange 6 des Stellglieds 5 ist das als Drosselklappe 7 eines Verbrennungsmotors ausgebildete, das Kraftstoff/ Luft-Gemisch beeinflussende Element verstellbar.

Ein Kraftstoffpumpenrelais 8 einer nicht dargestellten Kraftstoffpumpe des Verbrennungsmotors ist über einen Parallelstromkreis 9 mit einer Stromquelle 10 verbindbar.

In dem einen Zweig 11 des Parallelstromkreises 9 ist ein Stellgliedkontakt 12 angeordnet, der derart durch das Stellglied 5 ansteuerbar ist, dass er bei Leerlaufstellung des Stellgliedes 5 geschlossen und bei Gasstellung des Stellgliedes 5 geöffnet ist.

In dem zweiten Zweig 13 des Parallelstromkreises 9 sind in Reihe ein Pedalkontakt 14 und ein Sicherheitskontakt 15 angeordnet.

Der Pedalkontakt 14 ist vom Gaspedal 1 derart ansteuerbar, dass er in Leerlaufstellung des Gaspedals 1 geöffnet und in Gasstellung des Gaspedals 1 geschlossen ist.

Der Sicherheitskontakt 15 ist in dem Gaspedal 1 selbst angeordnet. Dieses Gaspedal 1 besteht aus zwei Pedalteilen 16, die um die gleiche Achse wie das gesamte Gaspedal 1 auch relativ zueinander verschwenkbar sind. Durch eine Feder 17 werden die Pedalteile 16 bei nicht betätigtem Gaspedal 1 in die dargestellte Lage voneinander weggedrückt. Damit sind die einander gegenüberliegend je an

einem Pedalteil 16 angeordneten Kontakte 18 des Sicherheitskontakts 15 ausser Berührung voneinander.

Bei intakter Einrichtung befinden sich im Leerlaufbetrieb die einzelnen Kontakte in der dargestellten Stellung. Wird das Gaspedal 1 vom Fahrer aus der Leerlaufstellung herausbewegt und damit von dessen Fuss druckbeaufschlagt, so erfolgt zuerst ein Zusammendrücken der Pedalteile 16 entgegen der Kraft der Feder 17, wodurch die Kontakte 18 miteinander in Berührung kommen und somit der Sicherheitskontakt 15 geschlossen wird.

Bei weiterem Niederdrücken des Gaspedals 1 schliesst auch der Pedalkontakt 14, und der Sollwertgeber 2 wird verstellt. Sein Ausgangssignal, das in der Regelelektronik 3 verarbeitet wird, führt zu einer Verstellung des Stellgliedes 5 aus dessen Leerlaufstellung, wodurch wiederum ein Aufsteuern des Stellgliedkontakts 12 erfolgt.

Ist das Stellglied 5 defekt, so dass es trotz Leerlaufstellung des Gaspedals 1 nicht mehr in seine Leerlaufstellung zurückkehrt, so bleibt der Stellgliedkontakt 12 geöffnet. Eine Ansteuerung des Kraftstoffpumpenrelais 8 ist dann wiederum nur noch über den zweiten Zweig 13 des Parallelstromkreises 9 möglich unter der Voraussetzung, dass das Gaspedal 1 aus seiner Leerlaufstellung herausbewegt und damit der Pedalkontakt 14 geschlossen wird.

Erfolgt eine Bewegung des Gaspedals 1 aus seiner Leerlaufstellung ohne ein Betätigen des Gaspedals 1 durch den Fahrer, z.B durch Bruch der Druckfeder 19, so bleibt der zweite Zweig 13 des Parallelstromkreises 9 ebenfalls geöffnet, so dass es nicht zu einer gefährlichen und unkontrollierbaren Fahrsituation kommen kann.

## Patentansprüche

1. Einrichtung zum elektrischen Steuern der Fahrgeschwindigkeit eines Kraftfahrzeuges, mit einem von einem Gaspedal (1) verstellbaren Sollwertgeber (2), von dessen Ausgangssignal ein Stellglied (5) eines das Kraftstoff/Luft-Gemisch eines Verbrennungsmotors beeinflussenden Elements beaufschlagbar ist, mit einem vom Gaspedal (1) derart betätigbaren Pedalkontakt (14), dass bei aus der Leerlaufstellung herausbewegtem Gaspedal (1) die Energieversorgung eines die Motordrehzahl beeinflussenden Aggregats herstellbar ist, dadurch gekennzeichnet, dass in Reihe zum Pedalkontakt (14) ein Sicherheitskontakt (15) angeordnet ist, der durch mechanische Beaufschlagung des Gaspedals (1) aus seiner Leerlaufstellung schliessbar ist.

2. Einrichtung nach Anspruch 1, dadurch gekennzeichnet, dass der Sicherheitskontakt (15) entgegen einer bestimmten Federkraft schliessbar ist.

3. Einrichtung nach einem der vorhergehenden Ansprüche, dadurch gekennzeichnet, dass der Pedalkontakt (14) und der Sicherheitskontakt (15) in einer von einer Stromquelle (10) zu einer Kraftstoffpumpe und/oder zum Zündstromkreis führenden Verbindungsleitung angeordnet sind.

4. Einrichtung nach einem der vorhergehenden Ansprüche, dadurch gekennzeichnet, dass parallel zu Pedalkontakt (14) und Sicherheitskontakt (15) ein Stellgliedkontakt (12) angeordnet ist, der in Leerlaufstellung des das Kraftstoff/Luft-Gemisch beeinflussenden Elements geschlossen und in Gasstellung des Elements geöffnet ist.

5. Einrichtung nach einem der vorhergehenden Ansprüche, dadurch gekennzeichnet, dass der Sicherheitskontakt (15) im Gaspedal (1) angeordnet ist.

6. Einrichtung nach Anspruch 5, dadurch gekennzeichnet, dass das Gaspedal (1) aus zwei entgegen einer Federkraft relativ zueinander schwenkbaren Pedalteilen (16) besteht, die einander zugewandt jeweils einen Kontakt (18) des Sicherheitskontakts (15) tragen, wobei die Kontakte (18) bei relativer Zueinanderbewegung unter Überwindung der Federkraft leitend miteinander verbindbar sind.

## Claims

1. Device for electrical control of the speed of travel of a motor vehicle, with a desired value signal emitter (2) which is adjustable by an accelerator pedal (1) and whose output signal is adapted to act on a regulating element (5) of a component influencing the fuel/air mixture of an internal combustion engine, with a pedal contact element (14) operatable by the accelerator pedal (1) in such a manner that when the accelerator pedal (1) is moved out of the idling position the energy supply to a unit influencing the engine speed can be established, characterised in that there is arranged in series with the pedal contact element (14) a safety contact element (15) which is adapted to be closed by mechanical action moving the accelerator pedal (1) from its idling position.

2. Device according to Claim 1, characterised in that the safety contact element (15) is adapted to be closed in opposition to a specific spring force.

3. Device according to one of the preceding claims, characterised in that the pedal contact element (14) and the safety contact element (15) are arranged in a connecting line leading from a current source (10) to a fuel pump and/or the ignition circuit.

4. Device according to one of the preceding claims, characterised in that a regulating contact element (12) is arranged in parallel with the pedal contact element (14) and the safety contact element (15), and is closed in the idling position of the component influencing the fuel/air mixture but opened in the vehicle-driving position of the component.

5. Device according to one of the preceding claims, characterised in that the safety contact element (15) is arranged in the accelerator pedal (1).

6. Device according to Claim 5, characterised in that the accelerator pedal (1) comprises two pedal parts (16) which are pivotably movable relatively to one another in opposition to spring force and which each carry one of the mutually facing contacts (18) of the safety contact element (15), the contacts (18) being adapted to connect with each other conductively when they move relatively to one another whilst overcoming the spring force.

## Revendications

1. Dispositif pour commander électriquement la vitesse de déplacement d'un véhicule automobile, comprenant un indicateur (2) de valeurs de consigne pouvant être ajusté par une pédale d'accélération (1) et par le signal de sortie duquel peut être actionné un organe de réglage (5) d'un élément influençant le mélange air/carburant d'un moteur à combustion interne, ainsi qu'un contact (14) de pédale pouvant être actionné par la pédale d'accélération (1), de telle sorte que, lorsque cette pédale d'accélération (1) est déplacée à l'écart de sa position de ralenti, il soit possible d'établir l'alimentation en énergie d'un groupe influençant la vitesse angulaire du moteur, dispositif caractérisé par le fait qu'un contact de sécurité (15), branché en série avec le contact (14) de pédale, peut être fermé par un actionnement mécanique de la pédale d'accélération (1) à l'écart de sa position de ralenti.

2. Dispositif selon la revendication 1, caractérisé par le fait que le contact de sécurité (15) peut être fermé à l'encontre d'une force élastique déterminée.

3. Dispositif selon l'une des revendications précédentes, caractérisé par le fait que le contact (14) de pédale et le contact de sécurité (15) se trouvent dans un conducteur de liaison partant d'une source de courant (10) et gagnant une pompe de carburant et/ou le circuit de courant d'allumage.

4. Dispositif selon l'une des revendications précédentes, caractérisé par le fait qu'un contact (12) associé à l'organe de réglage est branché en parallèle au contact (14) de pédale et au contact de sécurité (15), ce contact étant fermé lorsque l'élément influençant le mélange air/carburant occupe sa position de ralenti, et étant ouvert lorsque ledit élément se trouve en position d'accélération.

5. Dispositif selon l'une des revendications précédentes, caractérisé par le fait que le contact de sécurité (15) est incorporé dans la pédale d'accélération (1).

6. Dispositif selon la revendication 5, caractérisé par le fait que la pédale d'accélération (1) se compose de deux parties (16) qui peuvent pivoter l'une par rapport à l'autre à l'encontre de la force d'un ressort et portent des contacts respectifs (18) du contact de sécurité (15) tournés l'un vers l'autre, ces contacts (18) pouvant être mis en liaison mutuelle conductrice en accomplissant un mouvement relatif l'un vers l'autre et en surmontant la force du ressort.